# EUROPEAN PATENT SPECIFICATION

(11) **EP 2 473 584 B1**
(45) Date of publication and mention of the grant of the patent: **21.11.2018**
(21) Application number: 10812466.0
(22) Date of filing: 27.07.2010
(51) Int. Cl.: B01J 23/889, C10L 1/04, C10G 29/20, C10G 49/00, C10G 49/04, B01J 23/888, B01J 23/86, B01J 23/745, B01J 23/75, B01J 23/755, B01J 35/06, C10G 11/00, C10G 11/10, C10G 15/08

(54) **NON-FRACTIONATION PROCESS FOR PRODUCTION OF LOW-BOILING FUEL FROM CRUDE OIL OR FRACTIONS THEREOF**
FRAKTIONIERUNGSFREIES VERFAHREN ZUR HERSTELLUNG EINES BRENNSTOFFS MIT NIEDRIGEM SIEDEPUNKT AUS ROHÖL ODER FRAKTIONEN DAVON
PROCÉDÉ SANS FRACTIONNEMENT DE PRODUCTION DE COMBUSTIBLE À FAIBLE POINT D'ÉBULLITION À PARTIR DE PÉTROLE BRUT OU DE FRACTIONS DE CELUI-CI

(30) Priority: 31.08.2009 US 551264; 04.01.2010 US 651592
(43) Date of publication of application: 11.07.2012
(73) Proprietor: Gunnerman, Rudolf W., Reno, NV 89511 (US); Gunnerman, Peter W., Reno, Nevada 89519 (US)
(72) Inventor: GUNNERMAN, Rudolf, W., Reno, Nevada 89511 (US); GUNNERMAN, Peter, W., Reno, Nevada 89519 (US)
(74) Representative: Jacob, Reuben Ellis
(86) International application number: PCT/US2010/043351
(87) International publication number: WO 2011/025613

(56) References cited:
- WO-A1-2007/071701
- JP-A- 61 242 622
- US-A- 3 870 063
- US-A- 3 925 001
- US-A- 3 989 477
- US-A- 3 993 600
- US-A- 3 993 600
- US-A- 4 188 204
- US-A- 4 673 488
- US-A- 5 069 775
- US-A- 5 269 909
- US-A- 5 269 909
- US-A- 5 891 829

## Description

### BACKGROUND OF THE INVENTION

### 1. Field of the Invention

This invention lies in the field of crude oil, crude oil transport, and liquid fuels derived from crude oil.

### 2. Description of the Prior Art

Crude oil is the largest and most widely used source of power in the world. The fuels derived from crude oil enjoy a wide range of utility ranging from consumer uses such as fuels for automotive engines and home heating to commercial and industrial uses such as fuels for boilers, furnaces, smelting units, and power plants. Crude oil is a mixture of hydrocarbons differing widely in molecular weight, boiling and melting points, reactivity, and ease of processing. The mixture includes both light components that are of immediate utility and heavy components that have little or no utility, as well as components such as sulfur that are detrimental to the environment when carried over into the refined products. Many industrial processes have been developed to upgrade crude oil by removing, diluting, or converting the heavier components or those that tend to polymerize or otherwise solidify, notably the olefins, aromatics, and fused-ring compounds such as naphthalenes, indanes and indenes, anthracenes, and phenanthracenes.

Crude oil is found in many parts of the world, including a large number of remote locations. To process the crude, it is therefore often necessary to transport the crude over long distances to processing sites. One of the major modes of transportation is by pipeline, networks of which have been constructed in the United States and Canada as well as other parts of the world. Pipeline transport of crude oil presents certain difficulties, however, prominent among which is the high viscosity of the oil which makes pumping difficult even at mild temperatures, and particularly so in cold climates. The viscosity can be reduced by blending the crude oil with additives such as low-viscosity oils or refinery cuts, but this requires relatively large amounts of these additives and is feasible only where either light-oil fields or a refinery exist at the same site or nearby. The viscosity of heavy oil can also be reduced by heating. To achieve this, however, considerable amounts of heat are required, in addition to large capital expenditures for equipping the pipelines with heating equipment and insulation. A still further method of increasing the mobility of the oil is to add water to the oil to convert it to an emulsion prior to pumping it through the pipeline. Upon reaching its destination, the emulsion is separated into oil and water in a settling tank. To be economically viable, however, the emulsion must be formed with the aid of an emulsifier that produces a readily formed, yet stable, emulsion, and one that functions in the salinities that are often present in crude oil deposits and in the high temperatures often used to extract the oil from the deposits. The emulsifier must also be able to stabilize an emulsion with a high proportion of oil, and yet allow the emulsion to be separated at the destination. Since components of the emulsifier are often retained in the ultimate fuel, the emulsifier must also be one that is not detrimental to the environment when the fuel is burned.

Many crude oil deposits contain natural gas and other gaseous hydrocarbons, commonly referred to as "petroleum gas," that are released from the deposits together with the crude oil. These gases are released in particularly high amounts when the deposits are injected with water, steam or an inert gas to facilitate the extraction of oil from fields that have already been exhausted with pumps. Unless there is an on-site use for this petroleum gas, it presents a disposal problem. Disposal is commonly achieved by venting the gas to the atmosphere or by combusting the gas in a flare, both of which raise environmental concerns.

US 5 269 909 A describes a process obtaining improved viscosity and improved distillates proportion in heavy hydrocarbons, as heavy crude oil, by providing a feedstock of heavy hydrocarbons containing a water content of greater than or equal to 1% with respect to the weight of the hydrocarbons and reacting said hydrocarbons with a gas containing methane under pressure and at an elevated temperature.

### SUMMARY OF THE INVENTION

It has now been discovered that methane, and gas mixtures containing methane, can be utilized in the upgrading of a liquid feedstock consisting of crude oil or a liquid petroleum fraction to achieve a hydrocarbon mixture with a substantially greater proportion of low-boiling components than that of the liquid feedstock. This transformation is achieved in the process of the invention according to appended claim 1 by passing the methane at moderate temperature and pressure through a reactor that contains both the liquid feedstock and a solid metallic catalyst, drawing a gaseous product from the reactor, and condensing the gaseous product to liquid form. In certain embodiments of the invention, an electric potential is spontaneously generated in the reactor, without being initiated or supplemented by an externally imposed potential. The electric potential can be detected between sites on the metallic grid. Notably, for a grid that consists of windings of a conductive metal or combination of conductive metals, such as two or more transition metals and preferably also aluminum, over an iron frame, the electric potential can be measured between the windings and the iron frame. The fluctuations of the potential are generally irregular in both amplitude and frequency, but with a time-averaged value that significantly exceeds, by at least a factor of ten, the value of any such potential that exists between the same sites on the immersed catalyst grid in the absence of the gas flow through the grid.

The liquid condensate produced by the reaction is useful for a wide range of applications, including both fuels and additives, and is also useful for further processing, either in a refinery or as a second-stage liquid medium for reaction with further methane in the presence of the same type of catalyst in the same reactor configuration, in place of the starting liquid feedstock. The product is thus derived from natural gas or other sources of methane with little or no need for disposal of gaseous by-products. When the liquid feedstock is crude oil, hydrocarbon values are extracted from the heavy residual components of crude oil that are otherwise useful only for paving or roofing or other similar applications. Heavy crude oils can thus be converted to upgraded refinery feedstocks for more efficient fractionation, and automotive fuels can be obtained directly from the crude oil and methane, without fractionation of the crude oil. By its consumption of methane, the invention eliminates the need for disposal of petroleum gas at oil fields, or for the recovery of the gas at the fields and transportation of the recovered gas to remote destinations for consumption. One of the many uses of the hydrocarbon mixture resulting from the process of the invention is as a blending agent for the crude oil to lower the viscosity of the crude oil and thereby increase its mobility for pumping through a long-distance pipeline. The low-viscosity blend is formed without the need for costly additives at the source, or for heating equipment at the source or in the pipeline, or for emulsion breaking and separation at the destination, and can be formed entirely from materials extracted from the oil field. The present invention also provides a process for transporting crude oil through a pipeline according to appended claim 10.

These and other features, objects, and advantages of the invention will be apparent from the description that follows.

### BRIEF DESCRIPTION OF THE DRAWINGS

FIG. **1** is a process flow diagram embodying one example of an implementation of the invention.
FIG. **2** is a process flow diagram embodying a second example of an implementation of the invention.
FIG. **3** is a top view of a catalyst grid used in the reactors shown in the process flow diagrams of FIG. **1** and **2****.**

### DETAILED DESCRIPTION OF THE INVENTION AND PREFERRED EMBODIMENTS

The crude oil used in certain embodiments of this invention includes any of the various grades of crude oil, with particular interest in heavy and extra heavy crude oils. As used herein, the term "heavy crude oil" refers to any liquid petroleum with an API gravity less than 20°, equivalent to a specific gravity greater than 0.934 and a density greater than 7.778 lb/US gal (932 kg/m³), and the term "extra heavy crude oil" refers to any liquid petroleum with an API gravity of 15° or less (specific gravity greater than 0.96 and a density greater than 8.044 lb/US gal or 964 kg/m³) and a viscosity of 1,000-10,000 centipoise and higher (up to 100,000 centipoise). Heavy crude oil is found in Alberta and Saskatchewan, Canada, and also in California, Mexico, Venezuela, Colombia, and Ecuador, as well as Central and East Africa. Extra heavy crude oil is found in Venezuela and Canada.

For embodiments using petroleum fractions, these fractions include fossil fuels, crude oil fractions, and many of the components derived from these sources. Fossil fuels, as is known in the art, are carbonaceous liquids derived from petroleum, coal, and other naturally occurring materials, and also include process fuels such as gas oils and products of fluid catalytic cracking units, hydrocracking units, thermal cracking units, and cokers. Included among these carbonaceous liquids are automotive fuels such as gasoline, diesel fuel, jet fuel, and rocket fuel, as well as petroleum residuum-based fuel oils including bunker fuels and residual fuels. The term "diesel oil" denotes fractions or products in the diesel range, such as straight-run diesel fuel, feed-rack diesel fuel (diesel fuel that is commercially available to consumers at gasoline stations), light cycle oil, and blends of straight-run diesel and light cycle oil. The term "crude oil fractions" includes any of the various refinery products produced from crude oil, either by atmospheric distillation or by vacuum distillation, as well as fractions that have been treated by hydrocracking, catalytic cracking, thermal cracking, or coking, and those that have been desulfurized. Examples of crude oil fractions other than diesel oils are light straight-run naphtha, heavy straight-run naphtha, light steam-cracked naphtha, light thermally cracked naphtha, light catalytically cracked naphtha, heavy thermally cracked naphtha, reformed naphtha, alkylated naphtha, kerosene, hydrotreated kerosene, gasoline and light straight-run gasoline, atmospheric gas oil, light vacuum gas oil, heavy vacuum gas oil, residuum, vacuum residuum, light coker gasoline, coker distillate, FCC (fluid catalytic cracker) cycle oil, and FCC slurry oil. Preferred liquids for the reaction medium are mineral oil, diesel oil, naphtha, kerosene, gas oil, and gasoline. More preferred are diesel oil, kerosene, and gasoline, and the most preferred are kerosene and diesel oil.

The methane used in the practice of this invention includes both methane itself and gas mixtures containing methane, from any natural, municipal, agricultural, ecological, or industrial source. One example of a gas mixture containing methane is "coal bed methane," otherwise known as "coal mine methane" and "abandoned mine methane." Another example is petroleum gas, of which methane is the major component, the other components including ethane, propane, propylene, butane, isobutane, butylenes, and other C₄+ light hydrocarbons. Hydrogen, carbon dioxide, hydrogen sulfide, and carbonyl sulfide are also present in certain cases. A further example is landfill gas, of which methane constitutes about 40-60%, with the remainder primarily carbon dioxide. A still further example is methane from industrial sources, examples of which are municipal waste treatment plants. Landfill gas is commonly derived by bacterial activity in the landfill, while gas from municipal waste treatment plants is derived by bacterial activity or by heating. Gases containing at least about 50% methane are used, gases with 70% or more methane are preferred, and gases with at least 85% methane are more preferred. Gases containing 90% to 100% methane are of particular interest. This includes natural gas, of which methane typically constitutes approximately 95 mole percent. Natural gas when used is preferably used without supplementation with other gases, and particularly without significant amounts of hydrogen or carbon monoxide, preferably less than 1 % by volume of each. All percents in this paragraph are by volume unless otherwise stated.

The catalyst used in the practice of this invention is a transition metal catalyst, and can consist of a single transition metal or combination of transition metals, either as metal salts, pure metals, or metal alloys. Preferred catalysts for use in this invention are metals and metal alloys. Transition metals having atomic numbers ranging from 23 to 79 are preferred, and those with atomic numbers ranging from 24 to 74 are more preferred. Cobalt, nickel, tungsten, iron, and chromium, particularly in combination, are the most preferred. The transition metal can also be used in combination with metals other than transition metals. An example of such an additional metal is aluminum.

The catalyst is used in solid form and can either be immersed in the crude oil, positioned in the head space above the crude oil, or both. In either case, the methane-containing gas is bubbled through the oil and through or past the catalyst in a continuous-flow reaction. The catalyst assumes a form that allows intimate contact with both the methane and the crude oil and allows free flow of gas over and past the catalyst. Examples of suitable forms of the catalyst are pellets, granules, wires, mesh screens, perforated plates, rods, and strips. Granules and wires suspended across plates or between mesh matrices such as steel or iron wool are preferred for their relatively accessible high surface area. The form of the catalyst is a metallic grid, which term is used herein to denote any fixed form of metallic catalyst that contains interstices or pores that allow gas to pass through the grid. The term thus encompasses packed beds, screens, open-weave wire networks, and any other forms described above. The metal can be in bare form or supported on inert supports as coatings or laminae over ceramic substrates. A single catalyst grid spanning the width of the reactor can be used, or two or more such grids can be arranged in a vertical stack within the reactor, optionally with a small gap between adjacent grids. When two or more catalyst grids are used, at least one grid preferably resides in the head space above the liquid level. In some cases, the entire stack of grids resides in the head space, although the lowermost grid may be in intermittent contact with the liquid as the bubbling of the methane-containing gas through the liquid causes splashing of the liquid during the reaction.

When the catalyst is in the form of wires, individual cobalt, nickel, aluminum, chromium, and tungsten wires, for example, of approximately equal diameter and length, can be strung across a frame of cast iron, pig iron, gray iron, or ductile iron to form an open-mesh network which can then be supported inside the reactor. The wires can be supported on the frame directly or by being wound around pegs affixed to the frame, where the pegs are formed of a material that has an electrical resistivity that is substantially higher than the electrical resistivities of both the windings and of the frame. When pegs are used, preferred pegs are those with an electrical resistivity of at least about 15 × 10⁻⁸ ohm meters at 100°C. Chromium and chromium alloys are examples of materials that meet this description. A reactor can contain a single frame strung with wires in this manner or two or more such frames, depending on the size of the reactor. In a still further variation, the catalyst wire can be wound as a coil or other wrapping around or over piping that serves as a gas distributor for incoming gas.

When wires of the metal catalyst are used, the wires are preferably wound on the frame in such a manner that an electric potential is produced between the wires and the iron frame when the reaction is running. The potential will vary with the distance between the site on the windings and the site on the frame between which the potential is measured, and in some cases, with the locations of the sites themselves. In general, the greater the distance, the larger the potential. When the frame is circular in outer diameter with reinforcing bars or rods within the perimeter and the windings converge at the center of the frame, the electric potential is most effectively measured between the windings at the center and a location on the frame itself that is radially displaced from the center, for example a distance equal to approximately half the radius of the frame. With gas feed rates to the reactor of 50 standard cubic feet per hour (SCFH) or greater, the electric potential between these points will be at least about 100mV, preferably from about 100mV to about 10V, most preferably with a time-averaged value of from about 300mV to about 3V, and mean fluctuation frequencies of from about 30Hz to about 300Hz. With gas feed rates within the range of about 10,000 cubic feet per hour to about 100,000 SCFH, the time-averaged electric potential between these points can be from about 100mV to about 200mV, the maximum values can be from about 1V to about 5V, and the frequency can be from about 50sec⁻¹ to about 1,000sec⁻¹.

The methane-containing gas is preferably supplied to the reactor through one or more gas distributors to convert the gas stream to small bubbles for release into the reaction vessel below the liquid level. For a reactor of circular cross section, the distributors may have a wheel- and-spokes configuration or any other shape that includes a network of hollow pipes with an array of apertures. To further enhance the distribution, these pipes, or at least the apertures, can be covered with a steel mesh or steel wool in combination with wires of the various metals listed above, to intercept the gas bubbles and reduce them further in size before they enter the reaction medium.

The reaction is performed under non-boiling conditions to maintain the liquid feedstock in a liquid state and to prevent or at least minimize the vaporization of components from the liquid feedstock and their escape in unreacted form from the reaction vessel with the product. An elevated temperature, i.e., a temperature above ambient temperature, is used, preferably one that is about 80°C or above, more preferably one within the range of about 100°C to about 250°C, most preferably within the range of about 150°C to about 200°C. The operating pressure can vary as well, and can be either atmospheric, below atmospheric, or above atmospheric. The process is readily and most conveniently performed at either atmospheric pressure or a pressure moderately above atmospheric. Preferred operating pressures are those within the range of about 1 atmosphere to about 2 atmospheres, most preferably within the range of about 1 atmosphere to about 1.5 atmospheres.

The flow rate of introduction of gas into the reactor can vary and is not critical to the invention. In most cases, best results in terms of product quality of economic operation will be obtained with a gas introduction rate of from about 60 to about 500, and preferably from about 100 to about 300, SCFH per U.S. gallon of crude oil in the reactor (approximately 106 to 893, and preferably 178 to 535, liter/min of gas per liter of the oil). The reaction will cause depletion of the crude oil volume at a slow rate, which can be corrected by replenishment with fresh crude oil to maintain a substantially constant volume of liquid in the reactor. The replenishment rate needed to accomplish this is readily determined by simple observation of the liquid level in the tank, and in most cases will range from about 0.5 to about 4.0 parts by volume per hour per 10 parts by volume initially charged to the reactor for continuous, steady-state operation. In presently preferred operation, the volumetric production of condensed liquid product per volume of crude oil consumed ranges from about 0.5 to about 5.0, preferably from about 1.0 to about 3.0, and test data currently available upon the date of application for this patent indicates a value of approximately 2.0 for this ratio.

The gaseous product emerging from the reactor is condensed to a liquid whose distillation curve differs from that of the liquid feedstock by being shifted downward. When the liquid feedstock is crude oil or petroleum, the condensed product has a distillation curve that is shifted downward relative to petroleum by about 100 degrees Celsius or more. The condensed product can be used directly as a fuel, a refinery feedstock, a blending agent for pipeline transport, or any of various other uses outside the plant. Alternatively, the condensed product can be used as the liquid phase in a second-stage reaction with a gaseous reactant from the same source as the first reactant, the same or similar catalyst, and the same or similar reaction conditions, to produce a secondary condensate of a still higher grade. The secondary condensate will have more enhanced properties, making it even more suitable for each of the various end uses set forth above.

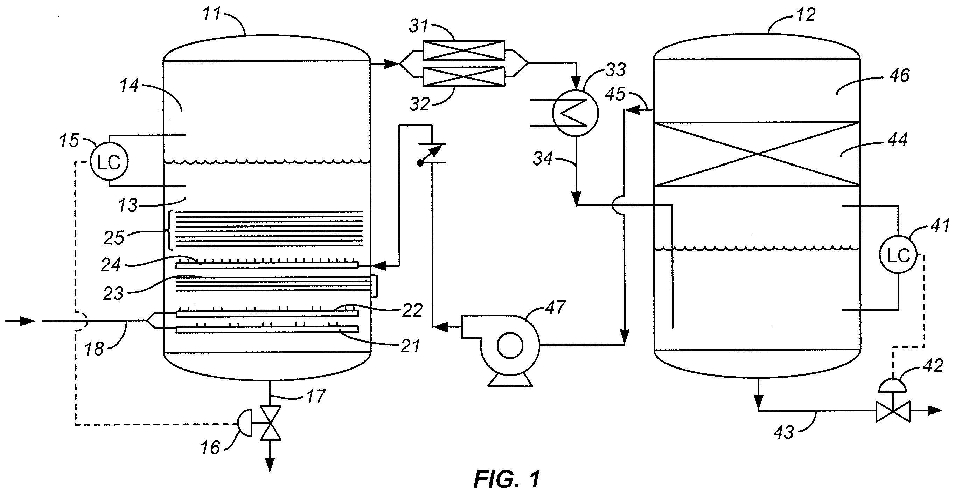

The Figures hereto present examples of process flow diagrams for implementation of the present invention in a production facility. The flow diagram in FIG. **1** includes a reaction vessel **11** and a product vessel **12,** each of which is a closed cylindrical tank. The reaction vessel **11** is charged with any of the liquid feedstocks **13** described above, the liquid feedstock occupying a portion of the internal volume of the vessel, leaving a gaseous head space **14** above the liquid level. The liquid level is maintained by a level control **15** which is actuated by a pair of float valves inside the vessel. The level control **15** governs a motor valve **16** on a drain line **17** at the base of the vessel.

Natural gas or other methane-containing gas is fed to the reaction vessel **11** underneath the liquid level at an inlet gas pressure of from about 3 psig to about 20 psig, through a gas inlet line **18** which is divided among two gas distributors **21, 22** inside the reactor vessel, each distributor spanning the full cross section of the vessel. The number of feed gas distributors can vary and can be greater or lesser than the two shown. A resistance heater **23** is positioned in the reactor above the gas distributors, and a third gas distributor **24** is positioned above the resistance heater. The third gas distributor **24** receives return gas from the product receiving vessel **12** as explained below.

Positioned above the three gas distributors **21, 22, 24** and the resistance heater **23** but still beneath the liquid level are a series of catalyst grids **25** arranged in a stack. Each grid is a circular frame with metallic catalyst wires strung across the frame. With wires that are 1 mm in diameter, for example, and with individual wires for each metal, two pounds of each metal wire can be used per frame, or eight pounds total per frame. In a preferred embodiment, seven frames are used, each wound with the same number and weight of wires. Screens of wire mesh are placed between adjacent plates for further reduction of the sizes of the gas bubbles. Stainless steel or aluminum screens of 40-mesh (U.S. Sieve Series) can be used.

Product gas is drawn from the head space **14** of the reaction vessel **11** and passed through a supplementary catalyst bed of the same catalyst material as the catalyst grids **25** of the reaction vessel. In the diagram shown, two such supplementary catalyst beds **31, 32** of identical construction and catalyst composition are arranged in parallel. The supplementary catalyst beds in this embodiment are metallic wire screens, grids, or perforated plates similar to those of the catalyst grids **25** in the reactor vessel **11.** The supplementary catalyst promotes the same reaction that occurs in the reaction vessel **11** for any unreacted material that has been carried over with the product gas drawn from the reaction vessel. Product gas emerging from the supplementary catalyst beds is passed through a condenser **33,** and the resulting condensate **34** is directed to the product vessel **12** where it is introduced under the liquid level in the product vessel.

The liquid level in the product vessel **12** is controlled by a level control **41** that is actuated by a pair of float valves inside the vessel and that governs a motor valve **42** on a liquid product outlet line **43** at the base of the vessel. Above the liquid level is a packed bed **44** of conventional tower packings. Examples are Raschig rings, Pall rings, and Intalox saddles; other examples will be readily apparent to those familiar with distillation towers and column packings. The packing material is inert to the reactants and products of the system, or at least substantially so, and serves to entrap liquid droplets that may be present in the gas phase and return the entrapped liquid back to the bulk liquid in the lower portion of the vessel. Unreacted gas **45** is withdrawn from the head space **46** above the packed bed by a gas pump **47.** The pump outlet is passed through a check valve **48** and then directed to the reaction vessel **11** where it enters through the gas distributor **24** positioned between the resistance heater **23** and the catalyst grids **25.**

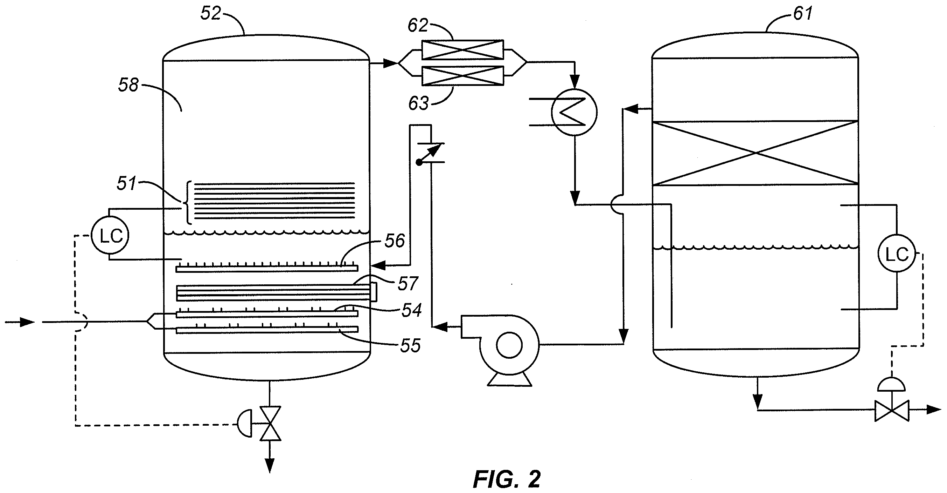

The production facility in FIG. **2** is identical to that of FIG. **1** except that the catalyst grids **51** are mounted at a height in the reaction vessel **52** that is above the liquid level **53.** Methane-containing gas is fed to the reaction vessel **52** underneath the liquid level as in FIG. **1****,** at the same pressure and through gas distributors **54, 55** similarly placed, and gas from the product receiving vessel **61** enters the reaction vessel **52** through a third gas distributor **56,** also under the liquid level. A resistance heater **57** is positioned in the reaction vessel in the same location as the resistance heater of FIG. **1****.** As in FIG. **1****,** product gas is drawn from the head space **58** of the reaction vessel **52** above the catalyst grids **51.** The remaining units in the flow diagram, including the product receiving vessel **61,** the supplementary catalyst beds **62, 63,** and their associated components, connecting lines, and valves, are identical to those of FIG. **1****.**

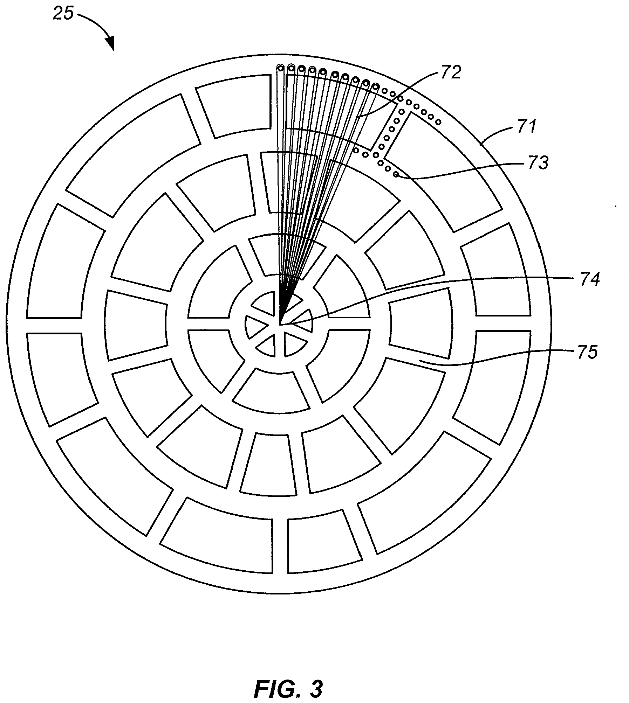

FIG. **3** is a top view of one of the catalyst grids **25** of FIG. **1****,** which are identical to the catalyst grids **51** of FIG. **2** The view of FIG. **3** shows the frame **71** and only a portion of the windings **72** (in the actual construction, the windings will continue to cover the full circumference of the frame). Also shown are pegs **73** around which the windings are wound. The electric potential discussed above can be measured between the collected windings at the center **74** of the grid and a site **75** on the frame at a distance approximately half the length of the radius from the center.

Alternatives to the units described above and shown in the figure will be readily apparent to the skilled chemical engineer. The resistance heater, for example, can be replaced by heating jackets, heating coils using steam or other heat-transfer fluids, or radiation heaters. Heating of the reaction vessel can also be achieved by recirculation of heat transfer fluid between the coolant side of the condenser and the reaction vessel. The gas distributors for the inlet feed and the recycle gas can be perforated plates, cap-type distributors, pipe distributors, or other constructions known in the art. Liquid level control can be achieved by float-actuated devices, devices measuring hydrostatic head, electrically actuated devices, thermally actuated devices, or sonic devices. The condenser can be a shell-and-tube condenser, either horizontal or vertical, or a plate-and-frame condenser, and either co-current or counter-current. The condensers can be air-cooled, water-cooled, or cooled by organic coolant media such as automotive anti-freeze or other glycol-based coolants.

### EXAMPLE 1

This example illustrates the present invention as applied to natural gas as the methane-containing gas and diesel oil as the liquid petroleum fraction. The equipment used was as shown in FIG. **1****,** in which the reaction vessel was a tank with a volumetric capacity of 1,000 gallons (3,785 liters) and a diameter of 6.5 feet (2 meters). The tank was initially charged with 600 gallons (2,270 liters) of diesel fuel maintained at a temperature of 290°F (143°C) and a pressure of 6 psig (143 kPa), and natural gas was bubbled through the reactor at a rate of 20,000 SCFH. The catalyst grids consisted of nickel wire, tungsten wire, cobalt wire (an alloy containing approximately 50% cobalt, 10% nickel, 20% chromium, 15% tungsten, 1.5% manganese, and 2.5% iron), and aluminum wire over a gray iron frame. Once fully started, the reactor produced liquid product at a rate of 200 gallons per hour (760 liters per hour), and two gallons of product for every gallon of reaction medium depleted. All gallons listed herein are U.S. gallons.

The product was analyzed by standard ASTM protocols and the results are listed in Table I.

**TABLE I: Product Test Results**

| | Protocol | Result | |
|---|---|---|---|
| Flash Point | ASTM D 93 | 64°C | |
| Sediment and Water | ASTM D2709 | 0.000 vol % | |
| Observed barometric pressure | | 759 mm Hg | |
| Distillation corrected to 760 mm | ASTM D 86 | | |
| Hg (1 atm) | | Percent Recovered: | Temperature |
| | | Initial b.p. | 179.9°C |
| | | 5 | 193.8°C |
| | | 10 | 199.5°C |
| | | 15 | 203.8°C |
| | | 20 | 208.0°C |
| | | 30 | 216.2°C |
| | | 40 | 223.4°C |
| | | 50 | 230.5°C |
| | | 60 | 238.0°C |
| | | 70 | 246.7°C |
| | | 80 | 257.3°C |
| | | 85 | 264.3°C |
| | | 90 | 272.9°C |
| | | 95 | 287.8°C |
| | | End | 296.1°C |
| | | Recovery | 97.0% |
| Viscosity @ 40°C | ASTM D 445a-1.8 | 1.83 mm²/s | |
| Ash | ASTM D 482 | <0.001 weight % | |
| Sulfur by Microcoulometry | ASTM D 3120 | 5 mg/kg | |
| Total Sulfur by UV Fluorescence | ASTM 5453-1.0 | 2.4 mg/kg | |
| Copper Corrosion, 3 hours at 50°C | ASTM D 130 | 1a | |
| Cetane No. | ASTM D613 | 42.8 | |
| API Gravity at 60°F | ASTM D287 | 38.2 Deg. API | |
| Aromatics | | 18.1 volume % | |
| Olefins | | 1.6 volume % | |
| Saturates | | 80.3 volume % | |
| Cloud Point | ASTM D2500 | -44°C | |
| Ramsbottom Carbon Residue, 10% Bottoms | ASTM D 524 | 0.06 weight % | |
| Lubricity by HFRR at 60°C | | 2809µm | |
| Total Nitrogen | ASTM D 4629 | 7.7 mg/kg | |
| Total Aromatics | ASTM D 5186 | 19.2 weight % | |
| Mono-Aromatics | ASTM D 5186 | 18.3 weight % | |
| Polynuclear Aromatic Hydrocarbons | ASTM D 5186 | 0.9 weight % | |

Electrical measurements were taken between the windings at the center of the frame and the frame at a point midway between the center and the outer edge. At steady state, the measurements at one point in time were those shown in Table II:

**TABLE II: Voltage Generated**

| | Voltage | Period | Frequency | Rise Time | Fall Time |
|---|---|---|---|---|---|
| Mean | 1.1160V | 41.7msec | 75.1Hz | 4.8msec | 4.6msec |
| Minimum | 110mV | 16.4µsec | 2.1Hz | -20.6msec | -221.4µsec |
| Maximum | 4.243V | 482.7msec | 61.0kHz | 461.1msec | 463.6msec |

The product was used as fuel in an F-150 Ford pick-up truck for city driving in Reno, Nevada, USA, to achieve a mileage of 14 miles/gal. The same pick-up truck normally obtains 10 miles/gal on gasoline. The product was also used as fuel in Mercedes Benz 320S automobile in city driving in Reno, Nevada, USA, to achieve mileage of 30 miles/gal. With commercial diesel fuel, the same vehicle obtained 18 miles/gal. The product was also used on a Hummer 1 automobile in city driving in Reno, Nevada, USA, to achieve mileage of 12 miles/gal. With commercial diesel fuel, the same vehicle obtained 7 miles/gal.

### EXAMPLE 2

This example provides the results of emissions tests on two test fuels manufactured in accordance with the present invention and compares these results with results obtained on commercially available No. 2 Ultra Low Sulfur Diesel (ULSD) fuel, all tests conducted in heavy-duty on-road diesel engines using the EPA Transient Cycle Heavy-Duty Test Protocol. The two test fuels were manufactured under the same conditions and in the same equipment as that of Example 1, with kerosene as the liquid petroleum faction in the first test fuel and No. 2 ULSD as the liquid petroleum faction in the second test fuel, and natural gas (95% methane) as the methane-containing gas for both.

The heavy duty test engine used in the tests was a 1990 model year Caterpillar diesel engine, Model No. 3406B. The test protocol is one that is currently used for emission testing of heavy-duty on-road engines in the United States, pursuant to 40 CFR §86.1333. The test begins with a cold start after parking overnight, followed by idling, acceleration, and deceleration phases and subjects the engine to a wide variety of speeds and loads sequenced in a computer-controlled automatic engine dynamometer to simulate the running of the vehicle. There are few stabilized running conditions, and the average load factor is about 20% to 25% of the maximum horsepower available at a given speed. The test cycle is twenty minutes in duration and two such cycles are performed, the first from a cold start and the second from a hot start twenty minutes after the end of the first cycle. The equivalent average speed is about 30 km/h and the equivalent distance traveled for each cycle is 10.3 km. Emissions that were continuously measured and recorded every second included total hydrocarbons (THC), methane (CH₄), non-methane hydrocarbons (NMHC = THC - CH₄), carbon monoxide (CO), carbon dioxide (CO₂), oxides of nitrogen (NOₓ), and nitrous oxide (NO₂). Fuel consumption was measured gravimetrically and reported in grams per brake horsepower per hour (g/bhp-hr). Particulate matter (PM) was captured over the entire test cycle on a single filter medium and weighed. A non-dispersive infrared detector was used for measuring CO and CO₂, a flame ionization detector was used for measuring THC and CH₄, a heated chemiluminescent detector was used for measuring NOₓ and NO, and PM was measured by a primary tunnel dilution followed by secondary tunnel dilution in a Model SPC-472 Smart Sampler of AVL Powertrain Engineering, Inc. The raw data were corrected by the computer for temperature, barometric pressure, and humidity, as well as for any hydrocarbons and carbon monoxide present in the dilution air, and expressed as grams per brake horsepower per hour.

The results are shown in Tables III and IV, where the "Baseline" values represent the results obtained with the commercially obtained No. 2 ULSD diesel fuel.

**TABLE III**

| Emission Test Results - Raw Data | | | | | | | | | |
|---|---|---|---|---|---|---|---|---|---|
| | --------bhp/hr------- | | ------------------------------grams------------------------------ | | | | | | g/bhp-hr |
| | HP | HP | | | | | | | |
| | Demand | Actual | THC | NMHC | CO | NOₓ | CO₂ | Fuel | PM |
| Baseline | 24.37 | 23.01 | 4.20 | 3.94 | 64.5 | 233.4 | 15172.6 | 4371.5 | 0.224 |
| Test Fuel No. 1 | 24.38 | 22.67 | 5.85 | 5.61 | 64.7 | 208.0 | 14902.0 | 4364.0 | 0.243 |
| Deviation from Baseline | | -1.5% | 39.3% | 42.4% | 0.3% | -10.9% | -1.8% | -0.2% | 8.5% |
| Test Fuel No. 2 | 24.37 | 22.83 | 4.87 | 4.22 | 66.2 | 215.5 | 14932.5 | 4388.0 | 0.214 |
| Deviation from Baseline | | -0.8% | 16.0% | 7.1% | 2.6% | -7.7% | -1.6% | 0.4% | -4.5% |

**TABLE IV**

| Emission Test Results - Corrected | | | | | | | | | |
|---|---|---|---|---|---|---|---|---|---|
| | --------bhp/hr-------- | | ---------------------------g/bhp-hr-------------------------- | | | | | | |
| | HP | HP | | | | | | | |
| | Demand | Actual | THC | NMHC | CO | NOₓ | CO₂ | Fuel | PM |
| Baseline | 24.37 | 23.01 | 0.18 | 0.17 | 2.81 | 10.15 | 659.46 | 0.4189 | 0.224 |
| Test Fuel No. 1 | 24.38 | 22.67 | 0.26 | 0.25 | 2.86 | 9.18 | 657.41 | 0.4244 | 0.243 |
| Deviation from Baseline | | -1.5% | 44.4% | 47.1% | 1.8% | -9.6% | -0.3% | 1.3% | 8.5% |
| Test Fuel No. 2 | 24.37 | 22.83 | 0.20 | 0.18 | 2.90 | 9.44 | 654.13 | 0.4238 | 0.214 |
| Deviation from Baseline | | -0.8% | 11.1% | 5.9% | 3.2% | -7.0% | -0.8% | 1.2% | -4.5% |

### EXAMPLE 3

This example illustrates the present invention in a process utilizing natural gas and Trap Springs crude oil (Railroad Valley, Nye County, Nevada, USA). The equipment used was as shown in FIG. 2, with a tank having a volumetric capacity of 50 gallons (190 liters) as the reaction vessel. The tank was initially charged with 12 gallons (45 liters) of the crude oil and was maintained at a temperature of 340°F (171°C) and a pressure of 3.5 psig (125 kPa). The natural gas was bubbled through the crude oil at a rate of 210 SCFH. The catalyst grids consisted of nickel wire, tungsten wire, cobalt wire (an alloy containing approximately 50% cobalt, 10% nickel, 20% chromium, 15% tungsten, 1.5% manganese, and 2.5% iron), and aluminum wire over a gray iron frame. Once fully started, the vapors drawn from the tank head space were condensed to produce liquid product at a rate of 3.5 gallons per hour (13.25 liters per hour), and two gallons of the liquid product, termed a first stage product, were produced for every gallon of reaction medium depleted. (All gallons listed herein are U.S. gallons.) Residual crude oil was then removed from the tank and replaced with twelve gallons of the first stage product, and the process repeated, *i.e*., further natural gas was bubbled through the first-stage product in the tank under the same conditions as when the tank contained the crude oil. The vapors drawn from the tank head space were condensed as they were formed, and the condensate was collected as a second stage product.

The test results on the initial crude oil and samples of both the first stage product and the second stage product, in both cases after one hour of operation, are listed in Table V.

**TABLE V**

| **Raw Material and Product Data** | | | | |
|---|---|---|---|---|
| Test and Protocol | Results | | | |
| Distillation corrected to 760 mm Hg (1 atm); ASTM D86 | | Temperature (°C) | | |
| | Percent Recovered | Crude Oil | 1^{st} Stage Product | 2^{nd} Stage Product |
| | 0⁽¹⁾ | 114.7 | 91.5 | 134.6 |
| | 5 | 179.3 | 130.1 | 153.7 |
| | 10 | 215.5 | 142.3 | 162.5 |
| | 15 | 246.7 | 153.1 | 169.6 |
| | 20 | 273.9 | 162.7 | 175.4 |
| | 30 | 352.9 | 181.6 | 186.8 |
| | 40 | 359.6 | 199.8 | 197.1 |
| | 50 | 349.6 | 216.7 | 206.9 |
| | 60 | 348.8 | 233.2 | 216.9 |
| | 70 | --⁽²⁾ | 248.1 | 226.8 |
| | 80 | -- | 264.0 | 238.0 |
| | 85 | -- | 273.9 | 245.1 |
| | 90 | -- | 286.5 | 254.2 |
| | 95 | - | 309.7 | 270.1 |
| | End | -- | 315.1 | 283.4 |
| | Recovery | 70 | 97% | 97.3% |
| API Gravity at 60°F; ASTM D287 | | 23.2° API | 44.0° API | 46.0° API |
| | | | | |
| Sulfur by Microcoulometry; ASTM D 3120 | | 19,800 mg/kg | 2,800 mg/kg | 1,400 mg/kg |
| | | | | |
| Viscosity @ 40°C; ASTM D 445a-1.8 | | 75.32 mm²/s | 1.43 mm²/s | 1.34mm²/s |
| | | | | |
| Flash Point; ASTM D93 (Proc. A) | | | | 35.0°C |
| | | | | |
| Ash; ASTM D482 | | | | <0.001% (wt) |
| | | | | |
| Copper Corrosion @ 50°C; ASTM D130 | | | | 1A 3 hours |
| | | | | |
| Cloud Point; ASTM D2500 | | | | -48°C |
| | | | | |
| Ramsbottom Carbon 10% Residue; ASTM D524 | | | | 0.09% (wt) |
| | | | | |
| Cetane Index; ASTM D976 | | | | 48.5 |
| | | | | |
| Lubricity by HFRR⁽³⁾ at 60°C; ASTM | | | | 40µm |

| | | | | |
|---|---|---|---|---|
| ⁽¹⁾ Initial boiling point ⁽²⁾ Sample would not distill past 70% recovery ⁽³⁾ High-Frequency Reciprocating Rig | | | | |

In the claims appended hereto, the terms "a" and "an" are intended to mean "one or more." The term "comprise" and variations thereof such as "comprises" and "comprising," when preceding the recitation of a step or an element, are intended to mean that the addition of further steps or elements is optional and not excluded. All patents, patent applications, and other published reference materials cited in this specification are hereby incorporated herein by reference in their entirety. Any discrepancy between any reference material cited herein and an explicit teaching of this specification is intended to be resolved in favor of the teaching in this specification. This includes any discrepancy between an art-understood definition of a word or phrase and a definition explicitly provided in this specification of the same word or phrase.

## Claims

1. A process for producing a liquid fuel from a gas containing at least about 50% methane by volume, said process comprising:
(a) contacting said gas with (i) a liquid feedstock consisting of crude oil or a liquid petroleum fraction and (ii) a metallic catalyst grid, both said liquid feedstock and said metallic catalyst grid contained in a reaction vessel, at a temperature of about 80°C or above but below the boiling temperature of said crude oil, said metallic catalyst grid comprising windings of a transition metal supported on an iron frame;
(b) recovering a gaseous reaction product formed in said reaction vessel; and
(c) condensing said gaseous reaction product to said liquid fuel.

2. The process of claim **1** wherein said gas is natural gas

3. The process of claim **1** wherein gas is natural gas and said liquid feedstock is crude oil or diesel oil.

4. The process of claim **1** wherein said liquid feedstock occupies a portion of said reaction vessel and thereby forms a liquid level in said reaction vessel and a head space above said liquid level, said metallic catalyst grid resides in said head space, step (a) comprises feeding said gas to said reaction vessel under said liquid level, and step (b) comprises recovering said gaseous reaction product from said head space.

5. The process of claim **1** wherein step (a) is performed at a temperature of from about 150°C to about 200°C and a pressure of from about 1 atmosphere to about 1.5 atmospheres.

6. The process of claim **1** wherein the frame is circular in outer diameter with reinforcing bars or rods within the perimeter and the windings converge at the center of the frame.

7. The process of claim **1** wherein said windings are of a plurality of transition metals including cobalt, nickel, tungsten, chromium, and aluminum on an iron frame.

8. A process of claim 1, wherein said gas is defined as a first gas, said gaseous reaction product is defined as a first gaseous reaction product, and said liquid fuel is defined as a first condensate; said process further comprising:
(b) passing a second gas containing at least about 50% methane by volume through said first condensate and a metallic catalyst grid, both said first condensate and said metallic catalyst grid contained in a second reaction vessel, with said first condensate at a temperature of about 80°C or above but below the boiling temperature of said first condensate, said metallic catalyst grid comprising windings of a transition metal supported on an iron frame;
(c) recovering a second gaseous reaction product from said second reaction vessel;
(d) condensing said second gaseous reaction product to form said liquid fuel.

9. The process of claim 8 wherein said liquid feedstock is crude oil and said first gas and said second gas are both natural gas.

10. A process for transporting crude oil through a pipeline, said process comprising:
(a) contacting a gas containing at least about 50% methane by volume with (i) a liquid feedstock consisting of crude oil or a liquid petroleum fraction and (ii) a metallic catalyst grid, both said liquid feedstock and said metallic catalyst grid contained in a reaction vessel, at a temperature of about 80°C or above but below the boiling temperature of said crude oil, said metallic catalyst grid comprising windings of a transition metal supported on an iron frame;
(b) recovering a gaseous reaction product formed in said reaction vessel; and
(c) condensing said gaseous reaction product to said liquid fuel;
(d) blending said crude oil with the resulting liquid fuel to form a blend; and
(e) pumping said blend through said pipeline.

11. The process of claim 10 wherein liquid feedstock is crude oil and said gas is natural gas.

12. The process of claim 10 wherein step (d) is performed at a temperature of from about 150°C to about 200°C and a pressure of from about 1 atmosphere to about 1.5 atmospheres.

13. The process of claim 10 wherein said catalyst comprises windings of cobalt, nickel, tungsten, chromium, and aluminum on an iron frame.

## Patentansprüche

1. Verfahren zum Erzeugen eines Flüssigbrennstoffs aus einem Gas, das mindestens etwa 50 Volumen-% Methan enthält, wobei das Verfahren Folgendes umfasst:
(a) Inkontaktbringen des Gases mit (i) einem aus Rohöl oder einer flüssigen Erdölfraktion bestehenden flüssigen Ausgangsbrennstoff und (ii) einem Metallkatalysatorgitter, wobei sowohl der flüssige Ausgangsbrennstoff als auch das Metallkatalysatorgitter bei einer Temperatur von etwa 80 °C oder darüber aber unter der Siedetemperatur des Rohöls in einem Reaktionsgefäß enthalten sind, wobei das Metallkatalysatorgitter auf einem Eisengerüst gehaltene Wicklungen eines Übergangsmetalls umfasst;
(b) Zurückgewinnen eines in dem Reaktionsgefäß gebildeten gasförmigen Reaktionsprodukts; und
(c) Kondensieren des gasförmigen Reaktionsprodukts zu dem Flüssigbrennstoff.

2. Verfahren nach Anspruch 1, wobei es sich bei dem Gas um Erdgas handelt.

3. Verfahren nach Anspruch 1, wobei es sich bei dem Gas um Erdgas handelt und es sich bei dem flüssigen Ausgangsbrennstoff um Rohöl oder Dieselöl handelt.

4. Verfahren nach Anspruch 1, wobei der flüssige Ausgangsbrennstoff einen Abschnitt des Reaktionsgefäßes ausfüllt und dadurch ein Flüssigkeitsniveau in dem Reaktionsgefäß und einen Freiraum über dem Flüssigkeitsniveau bildet, wobei sich das Metallkatalysatorgitter in dem Freiraum befindet, wobei Schritt (a) das Einspeisen des Gases in das Reaktionsgefäß unterhalb des Flüssigkeitsniveaus umfasst und Schritt (b) das Zurückgewinnen des gasförmigen Reaktionsprodukts aus dem Freiraum umfasst.

5. Verfahren nach Anspruch 1, wobei Schritt (a) bei einer Temperatur von etwa 150 °C bis etwa 200 °C und einem Druck von etwa 1 Atmosphäre bis etwa 1,5 Atmosphären ausgeführt wird.

6. Verfahren nach Anspruch 1, wobei das Gerüst im Außendurchmesser kreisförmige ist und Verstärkungsstangen oder -stäbe innerhalb des Umfangs aufweist und die Wicklungen in der Mitte des Gerüsts zusammenlaufen.

7. Verfahren nach Anspruch 1, wobei die Wicklungen aus einer Vielzahl von Übergangsmetallen, einschließlich Kobalt, Nickel, Wolfram, Chrom und Aluminium, auf einem Eisengerüst sind.

8. Verfahren nach Anspruch 1, wobei das Gas als ein erstes Gas definiert wird, das gasförmige Reaktionsprodukt als ein erstes gasförmiges Reaktionsprodukt definiert wird und der Flüssigbrennstoff als ein erstes Kondensat definiert wird; wobei das Verfahren weiter Folgendes umfasst:
(b) Leiten eines mindestens etwa 50 Volumen-% Methan enthaltenden zweiten Gases durch das erste Kondensat und ein Metallkatalysatorgitter, wobei sowohl das erste Kondensat als auch das Metallkatalysatorgitter in einem zweiten Reaktionsgefäß enthalten sind, wobei das erste Kondensat auf einer Temperatur von etwa 80 °C oder darüber aber unter der Siedetemperatur des ersten Kondensats ist, wobei das Metallkatalysatorgitter auf einem Eisengerüst gehaltene Wicklungen eines Übergangsmetalls umfasst;
(c) Zurückgewinnen eines zweiten gasförmigen Reaktionsprodukts aus dem zweiten Reaktionsgefäß;
(d) Kondensieren des zweiten gasförmigen Reaktionsprodukts, um den Flüssigbrennstoff zu bilden.

9. Verfahren nach Anspruch 8, wobei es sich bei dem flüssigen Ausgangsbrennstoff um Rohöl handelt und es sich bei dem ersten Gas und bei dem zweiten Gas um Erdgas handelt.

10. Verfahren zum Transportieren von Rohöl durch eine Rohrleitung, wobei das Verfahren Folgendes umfasst:
(a) Inkontaktbringen eines mindestens etwa 50 Volumen-% Methan enthaltenden Gases mit (i) einem aus Rohöl oder einer flüssigen Erdölfraktion bestehenden flüssigen Ausgangsbrennstoff und (ii) einem Metallkatalysatorgitter, wobei sowohl der flüssige Ausgangsbrennstoff als auch das Metallkatalysatorgitter bei einer Temperatur von etwa 80 °C oder darüber aber unter der Siedetemperatur des Rohöls in einem Reaktionsgefäß enthalten sind, wobei das Metallkatalysatorgitter auf einem Eisengerüst gehaltene Wicklungen eines Übergangsmetalls umfasst;
(b) Zurückgewinnen eines in dem Reaktionsgefäß gebildeten gasförmigen Reaktionsprodukts; und
(c) Kondensieren des gasförmigen Reaktionsprodukts zu dem Flüssigbrennstoff;
(d) Mischen des Rohöls mit dem resultierenden Flüssigbrennstoff, um ein Gemisch zu bilden; und
(e) Pumpen des Gemischs durch die Rohrleitung.

11. Verfahren nach Anspruch 10, wobei es sich bei dem flüssigen Ausgangsbrennstoff um Rohöl handelt und es sich bei dem Gas um Erdgas handelt.

12. Verfahren nach Anspruch 10, wobei Schritt (d) bei einer Temperatur von etwa 150 °C bis etwa 200 °C und einem Druck von etwa 1 Atmosphäre bis etwa 1,5 Atmosphären ausgeführt wird.

13. Verfahren nach Anspruch 10, wobei der Katalysator Wicklungen aus Kobalt, Nickel, Wolfram, Chrom und Aluminium auf einem Eisengerüst umfasst.

## Revendications

1. Un procédé destiné à produire un combustible liquide à partir d'un gaz contenant au moins environ 50% en volume de méthane, ledit procédé comprenant les étapes consistant à :
(a) mettre en contact ledit gaz avec (i) une charge liquide consistant en pétrole brut ou une fraction pétrolière liquide et (ii) une grille de catalyseur métallique, ces dites charge liquide et grille de catalyseur métallique étant toutes deux contenues dans une cuve de réaction, à une température d'environ 80°C ou plus mais inférieure à la température d'ébullition dudit pétrole brut, ladite grille de catalyseur métallique comprenant des enroulements d'un métal de transition soutenus sur un cadre en fer ;
(b) récupérer un produit de réaction gazeux formé dans ladite cuve de réaction ; et
(c) condenser ledit produit de réaction gazeux en ledit combustible liquide.

2. Le procédé de la revendication 1 dans lequel ledit gaz est du gaz naturel.

3. Le procédé de la revendication 1 dans lequel le gaz est du gaz naturel et ladite charge liquide est du pétrole brut ou du carburant diesel.

4. Le procédé de la revendication 1 dans lequel ladite charge liquide occupe une partie de la cuve de réaction et forme ainsi un niveau de liquide dans ladite cuve de réaction et un espace supérieur au-dessus dudit niveau de liquide, ladite grille de catalyseur métallique réside dans ledit espace supérieur, l'étape (a) comprend l'introduction dudit gaz dans ladite cuve de réaction sous ledit niveau de liquide, et l'étape (b) comprend la récupération dudit produit de réaction gazeux depuis ledit espace supérieur.

5. Le procédé de la revendication 1 dans lequel l'étape (a) est réalisée à une température allant d'environ 150°C à environ 200°C et une pression allant d'environ 1 atmosphère à environ 1,5 atmosphères.

6. Le procédé de la revendication 1 dans lequel ledit cadre est circulaire sur un diamètre extérieur avec des barres ou tiges de renfort à l'intérieur du périmètre et les enroulements convergent au centre du cadre.

7. Le procédé de la revendication 1 dans lequel lesdits enroulements sont en une pluralité de métaux de transition y compris le cobalt, le nickel, le tungstène, le chrome et l'aluminium sur un cadre en fer

8. Un procédé de la revendication 1, dans lequel ledit gaz est défini comme un premier gaz, ledit produit de réaction gazeux est défini comme un premier produit de réaction gazeux, et ledit combustible liquide est défini comme un premier condensat ; ledit procédé comprenant en sus les étapes consistant à :
(b) faire passer un deuxième gaz contenant au moins environ 50% en volume de méthane à travers ledit premier condensat et une grille de catalyseur métallique, lesdits premier condensat et grille de catalyseur métallique étant tous deux contenus dans une deuxième cuve de réaction, avec ledit premier condensat à une température d'environ 80°C ou plus mais au-dessous de la température d'ébullition dudit premier condensat, ladite grille de catalyseur métallique comprenant des enroulements d'un métal de transition soutenus sur un cadre en fer ;
(c) récupérer un deuxième produit de réaction gazeux de ladite deuxième cuve de réaction ;
(d) condenser ledit deuxième produit de réaction gazeux pour former ledit combustible liquide.

9. Le procédé de la revendication 8 dans lequel ladite charge liquide est du pétrole brut et lesdits premier gaz et deuxième gaz sont tous deux des gaz naturels.

10. Un procédé destiné à transporter du pétrole brut à travers un pipeline, ledit procédé comprenant les étapes consistant à :
(a) mettre en contact un gaz contenant au moins environ 50% en volume de méthane avec (i) une charge liquide consistant en pétrole brut ou une fraction pétrolière liquide et (ii) une grille de catalyseur métallique, ces dites charge liquide et grille de catalyseur métallique étant toutes deux contenues dans une cuve de réaction, à une température d'environ 80°C ou plus mais inférieure à la température d'ébullition dudit pétrole brut, ladite grille de catalyseur métallique comprenant des enroulements d'un métal de transition soutenus sur un cadre en fer ;
(b) récupérer un produit de réaction gazeux formé dans ladite cuve de réaction ; et
(c) condenser ledit produit de réaction gazeux en ledit combustible liquide ;
(d) mélanger ledit pétrole brut avec le combustible liquide résultant pour former un mélange ; et
(e) pomper ledit mélange à travers ledit pipeline.

11. Le procédé de la revendication 10 dans lequel la charge liquide est du pétrole brut et ledit gaz est du gaz naturel.

12. Le procédé de la revendication 10 dans lequel l'étape (d) est réalisée à une température allant d'environ 150°C à environ 200°C et une pression allant d'environ 1 atmosphère à environ 1,5 atmosphères.

13. Le procédé de la revendication 10 dans lequel ledit catalyseur comprend des enroulements de cobalt, nickel, tungstène, chrome et aluminium sur un cadre en fer
